# FASCICULE DE BREVET EUROPEEN

(11) **EP 3 923 169 B1**
(45) Date de publication et mention de la délivrance du brevet: **24.07.2024**
(21) Numéro de dépôt: 21177676.0
(22) Date de dépôt: 04.06.2021
(51) Int. Cl.: G06F 21/57

(54) **DÉMARRAGE SÉCURISÉ D'UN CIRCUIT ÉLECTRONIQUE**
GESICHERTES STARTEN EINES ELEKTRONISCHEN SCHALTKREISES
SECURE STARTING OF AN ELECTRONIC CIRCUIT

(30) Priorité: 10.06.2020 FR 2006042
(43) Date de publication de la demande: 15.12.2021
(73) Titulaire: PROTON WORLD INTERNATIONAL N.V., 1831 Diegem (BE)
(72) Inventeur: VAN NIEUWENHUYZE, Olivier, 1970 WEZEMBEEK-OPPEM (BE)
(74) Mandataire: Cabinet Beaumont

(56) Documents cités:
- FR-A1- 3 043 229
- US-A1- 2016 055 113

## Description

### Domaine technique

La présente description concerne de façon générale les dispositifs électroniques et, plus particulièrement, les dispositifs incluant un processeur et un élément de sécurité embarqué. La présente description s'applique plus particulièrement à contrôler l'authenticité de tout ou partie d'un code ou d'un logiciel (firmware) comprenant un ensemble d'instructions exécuté par le processeur au démarrage du dispositif.

### Technique antérieure

De nombreux dispositifs électroniques, par exemple des téléphone portables, des clés électroniques (dongles), etc. sont équipés de microprocesseurs de traitement de données et d'exécution d'applications diverses. Parmi ces applications, certaines sont désormais liées à des opérations nécessitant de préserver la sécurité des informations échangées, par exemple des opérations de paiement, de contrôle d'accès, etc.

Dans des dispositifs plus importants, par exemple des ordinateurs, des boîtiers de décodage vidéo (Set Top Box), etc., on trouve des modules de plateforme sécurisée (TPM - Trusted Platform Module) qui permettent de protéger le contenu des mémoires d'instructions et en particulier de vérifier qu'un code ou programme devant être exécuté n'ait pas été corrompu. De tels modules font défaut dans des dispositifs moins élaborés tels que, par exemple, les téléphones portables, les clés électroniques et les objets connectés (montre connectée dongle d'accès, etc.).

Les dispositifs électroniques, même dépourvus de module de plateforme sécurisée, sont cependant de plus en plus souvent équipés d'éléments de sécurité embarqués qui sont en fait des circuits intégrés représentant les fonctions de sécurité des cartes à microcircuit (smartcard, SIM, etc.). Par exemple, ces éléments de sécurité contiennent l'application d'émulation d'une carte à microcircuit qui fournit le service sécuritaire d'authentification pour des opérations de paiement, de contrôle d'accès, etc.

FR 3043229 A1 divulgue un procédé de vérification de l'authenticité du contenu d'une mémoire, comportant une étape de vérification de signature du contenu d'une zone mémoire; et si la signature est vérifiée, une étape d'envoie d'une clé de déchiffrement au micro-contrôleur .

US2016/055113 A1 divulgue un micro-contrôleur qui, si un code de démarrage dans une première mémoire est compromis, connecte une seconde mémoire au bus partagé et déconnecte la première mémoire du bus partagé.

### Résumé de l'invention

Il serait souhaitable de pouvoir sécuriser le démarrage d'un dispositif électronique pour contrôler que le code ou les données qu'il contient sont authentiques, ou non corrompues.

Il serait souhaitable, en outre, de pouvoir sécuriser le démarrage d'un dispositif électronique adapté à mettre en oeuvre plusieurs systèmes d'exploitation pour contrôler et/ou gérer quel système d'exploitation est démarré.

Il serait souhaitable, en outre, de pouvoir sécuriser le démarrage d'un dispositif électronique adapté à mettre en oeuvre plusieurs systèmes d'exploitation pour contrôler que le code ou les données associés au système d'exploitation qu'il met en oeuvre sont authentiques, ou non corrompues.

Un mode de réalisation propose une solution palliant tout ou partie des inconvénients des techniques connues de démarrage de microprocesseur dans un dispositif électronique.

Un mode de réalisation propose de protéger un élément de sécurité embarqué associé à un microprocesseur dans un dispositif électronique.

Un mode de réalisation prévoit un procédé de vérification de l'authenticité d'au moins une première partie du contenu d'une mémoire non volatile d'un dispositif électronique comprenant un microcontrôleur et un élément de sécurité embarqué, comportant les étapes suivantes :
- démarrer le microcontrôleur avec des instructions stockées dans une première zone de mémoire sécurisée associée au microcontrôleur ;
- démarrer l'élément de sécurité, l'élément de sécurité comprenant plusieurs clés de déchiffrement chacune associée à une partie du contenu d'une deuxième zone de mémoire non volatile reprogrammable associée au microcontrôleur ;
- exécuter, par l'élément de sécurité, une vérification de signature d'une première partie du contenu de la deuxième zone ;
- si la signature est vérifiée, l'élément de sécurité envoie la clé de déchiffrement associé à ladite première partie au microcontrôleur ; et
- si la signature n'est pas vérifiée, l'élément de sécurité exécute une vérification de signature d'une autre partie du contenu de ladite deuxième zone mémoire.

Selon un mode de réalisation, chaque partie du contenu de la deuxième zone de la mémoire non volatile comprend des données et des instructions permettant au microcontrôleur de mettre en oeuvre un système d'exploitation différent.

Selon un mode de réalisation, le microcontrôleur est adapté à mettre en oeuvre au moins trois systèmes d'exploitation.

Selon un mode de réalisation, si aucune signature n'est vérifiée, l'élément de sécurité envoie des données au microcontrôleur.

Selon un mode de réalisation, lesdites données comprennent une clé de déchiffrement adaptée à ne déchiffrer aucune partie du contenu de ladite deuxième zone de ladite mémoire non volatile.

Selon un mode de réalisation, lesdites données comprennent des données et des instructions permettant au microcontrôleur de mettre en oeuvre un système d'exploitation inconnu du microcontrôleur.

Selon un mode de réalisation, ledit système d'exploitation inconnu du microcontrôleur est un système d'exploitation permettant de :
- redémarrer le microcontrôleur ;
- lancer un diagnostic du microcontrôleur ;
- mettre à jour un ou plusieurs systèmes d'exploitation que le microcontrôleur est adapté à mettre en oeuvre ; ou
- réinitialiser le microcontrôleur.

Selon un mode de réalisation, le microcontrôleur génère une deuxième clé, la transmet à l'élément de sécurité qui l'utilise pour chiffrer la transmission de la première clé vers le microcontrôleur.

Selon un mode de réalisation, la transmission de la deuxième clé utilise un algorithme asymétrique à clé publique.

Selon un mode de réalisation, la clé de chiffrement asymétrique est unique par couple microcontrôleur / élément de sécurité.

Selon un mode de réalisation, la première clé n'est pas stockée en mémoire non volatile dans le microcontrôleur.

Selon un mode de réalisation, en cas de mise à jour authentique d'au moins une partie du contenu de la deuxième zone, la signature associée à ladite partie stockée dans l'élément de sécurité est modifiée en conséquence.

Selon un mode de réalisation, la première clé est générée par l'élément de sécurité.

Selon un mode de réalisation, si la signature n'est pas vérifiée, l'élément de sécurité choisit une autre partie du contenu de ladite deuxième zone mémoire dont il exécute la vérification.

Selon un mode de réalisation, l'élément de sécurité peut choisir une autre partie du contenu de ladite deuxième zone mémoire sur la base d'une instruction reçue pendant une mise en oeuvre précédente d'une partie du contenu de la deuxième zone mémoire.

Un autre mode de réalisation prévoit un dispositif électronique comportant :
- un microcontrôleur ; et
- un élément de sécurité embarqué,
le microcontrôleur et l'élément de sécurité étant adaptés à la mise en oeuvre du procédé décrit précédemment.

Selon un mode de réalisation, un circuit intermédiaire est intercalé entre le microcontrôleur et l'élément de sécurité.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un mode de réalisation d'un dispositif électronique équipé d'un microcontrôleur et d'un élément de sécurité ;
la figure 2 représente, très schématiquement et sous forme de blocs, un mode de réalisation d'une séquence de démarrage du microcontrôleur du dispositif électronique de la figure 1 ; et
la figure 3 représente, sous forme d'organigramme, un autre mode de réalisation d'une séquence de démarrage du microcontrôleur du dispositif électronique de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

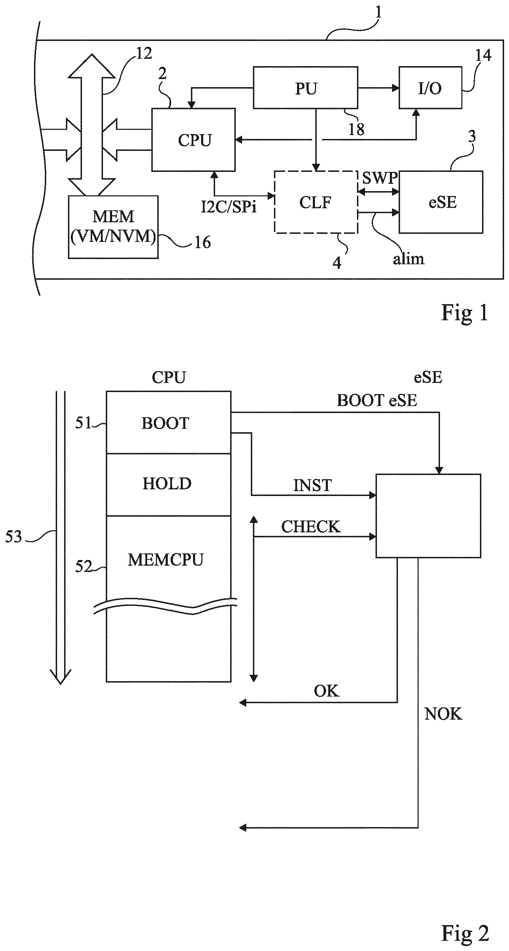

La figure 1 représente, de façon très schématique et sous forme de blocs, un exemple de dispositif électronique 1 du type auquel s'appliquent les modes de réalisation qui vont être décrits.

Le dispositif 1, par exemple un téléphone portable, une clé électronique, etc., comporte un microcontrôleur 2 (CPU - Central Processing Unit) chargé d'exécuter tout ou partie des programmes et applications mis en oeuvre dans le dispositif. Le microcontrôleur 2 communique, par l'intermédiaire d'un ou plusieurs bus 12 d'adresses, de données, et de commandes, avec différents circuits électroniques et périphériques (non représentés) du dispositif 1, par exemple des circuits de contrôle d'un écran, d'un clavier, etc., ainsi qu'avec diverses interfaces d'entrée-sortie 14 (I/O) filaires ou sans fil (par exemple Bluetooth). Le microcontrôleur 2 intègre généralement des mémoires volatiles et non volatiles et exploite également le contenu de mémoires similaires 16 (MEM (VM/NVM)) du dispositif 1. Le microcontrôleur 2 est adapté à mettre en oeuvre plusieurs systèmes d'exploitation, ou logiciel de bas niveau. A titre d'exemple, un premier système d'exploitation peut être un système d'exploitation principal, un deuxième système d'exploitation peut être un système d'exploitation de mise à jour, un troisième système d'exploitation peut être un système d'exploitation de récupération de données. Selon un autre exemple, le microcontrôleur 2 est adapté à mettre en oeuvre plusieurs systèmes d'exploitation principaux, comme par exemple le système d'exploitation principal d'un téléphone et le système d'exploitation d'une carte de transport ou d'une carte bancaire. Le microcontrôleur 2 et divers circuits du dispositif 1 sont alimentés par une unité de fourniture d'énergie 18 (PU - Power Unit). Par exemple, l'unité 18 est une batterie, le cas échéant associée à un régulateur de tension.

Dans les applications visées par la présente description, le dispositif 1 comporte en outre un élément de sécurité embarqué 3 (par exemple de type eSE - embedded Secure Element ou eUICC - embedded Universal Integrated Circuit Card) qui inclut un microprocesseur sécurisé. L'élément 3 est destiné à contenir les services ou applications sécurisés du dispositif électronique, par exemple, des applications de paiement, de contrôle d'accès, etc.

Le cas échéant, un élément ou circuit intermédiaire 4, par exemple un contrôleur de communication en champ proche 4 (NFC - Near Field Communication), également appelé tête sans contact (CLF - Contactless Front end), un contrôleur Bluetooth, etc., équipe le dispositif 1. Cet élément 4 (illustré en pointillés en figure 1) est susceptible d'être utilisé par le microcontrôleur 2, par exemple par des liaisons de type bus bifilaire (I2C ou SPI) et, par l'élément 3, par une liaison de type bus unifilaire (SWP - Single Wire Protocol).

Selon le niveau de tension supporté par l'élément de sécurité 3, celui-ci est soit alimenté par l'unité 18, soit comme cela est représenté en figure 1 par l'élément 4 qui est lui alimenté par l'unité 18. Par exemple, on peut considérer le cas d'un microcontrôleur 2 et d'un contrôleur de communication sans contact 4, alimentés sous une tension de l'ordre de 3 volts par l'unité 18 et d'un élément 3 alimenté sous une tension de l'ordre de 1,8 volt (alim) par le contrôleur 4. Le besoin d'une alimentation par le contrôleur NFC 4 peut provenir des niveaux exploités par les protocoles de communication entre le contrôleur et l'élément de sécurité 3. Selon une variante, le contrôler de communication sans contact 4 est absent, l'élément de sécurité 3 est, dans ce cas, directement connecté au microcontrôleur 2, et est directement alimenté par l'unité 18.

On prévoit de tirer profit de la présence de l'élément de sécurité embarqué 3 pour gérer quel système d'exploitation est exécuté par le microcontrôleur 2.

On prévoit, en outre, de tirer profit de la présence de l'élément de sécurité embarqué 3 pour vérifier l'authenticité du contenu (données, instructions, etc.) de tout ou partie des mémoires associées au microcontrôleur 2. Plus particulièrement, on prévoit de tirer profit de la présence de l'élément de sécurité 3 pour vérifier l'authenticité des données et instructions associées à chaque système d'exploitation que peut mettre en oeuvre le microcontrôleur 2 avant sa mise en oeuvre.

La figure 2 est une représentation schématique illustrant un mode de réalisation d'une séquence de démarrage du microcontrôleur 2 du dispositif électronique 1 de la figure 1.

Les risques inhérents au démarrage du microcontrôleur 2 en termes de sécurité des données sont, qu'en cas de piratage des données ou des instructions relatives à un des systèmes d'exploitation du microcontrôleur puissent être piratées. Ce risque se produit au démarrage, dit à froid, qui suit une mise sous tension (généralement appelé "cold boot") car l'ensemble des mécanismes de contrôle d'accès aux différents circuits n'ont pas encore été initialisés comme notamment, la configuration des mémoires selon des zones libres et des zones réservées. Le problème est moindre dans le cas d'une réinitialisation "à chaud" du dispositif, c'est-à-dire sans interruption de l'alimentation du microcontrôleur, car ces mécanismes de configuration des zones des mémoires ne sont généralement pas touchés. Toutefois, on peut également mettre en oeuvre la réalisation décrite en cas d'effacement partiel ou total de la mémoire lors d'une réinitialisation.

Lors d'un démarrage (mise sous tension des circuits électroniques du dispositif) ou d'une réinitialisation avec coupure de l'alimentation, le microcontrôleur 2 commence par accéder à une zone 51 (BOOT) figée de sa mémoire non volatile contenant un code (un programme de mise en route). Cette zone 51 est généralement une zone de mémoire morte, c'est-à-dire non volatile et non reprogrammable (parfois dite "immutable"). Selon une variante, la zone 51 peut être une zone sécurisée limitée, ou restreinte, en écriture d'une mémoire non volatile ou volatile. Elle est donc fixée à la fabrication et ne risque pas d'être modifiée par un éventuel pirate. En fait, la zone 52 (MEMCPU) de mémoire qu'il convient de protéger est une zone de mémoire non volatile qui va être exploitée par le microcontrôleur 2, lors de la mise en oeuvre des systèmes d'exploitation. Une telle zone 52 contient généralement du code (des instructions) et des données, qui sont reprogrammables en fonction des applications. Si un pirate parvient à stocker un code d'attaque dans cette zone, il risque de pouvoir avoir accès à l'élément de sécurité 3, et pourrait alors modifier le comportement du dispositif 1, de récolter des données et informations confidentiels manipulées directement par le système d'exploitation pour les fournir, par exemple, à une application pirate mise en oeuvre par le système d'exploitation. Dans la suite de la description, on considère que la zone 52 de la mémoire non volatile du microcontrôleur 2 est divisée en plusieurs parties comprenant chacune des données et instructions relatives à un système d'exploitation. Plus particulièrement, les données et instructions relatives à un système d'exploitation sont toutes chiffrées avec une ou plusieurs clés de chiffrement. Chaque système d'exploitation a sa ou ses propres clés de chiffrement différentes des clés de chiffrement des autres systèmes d'exploitation.

Selon un mode de réalisation, le code 51 de mise en route exécuté par le microcontrôleur contient une instruction de démarrage de l'élément de sécurité 3 (eSE) ainsi que, ultérieurement dans le séquencement du processus d'initialisation (illustré par une flèche 53), une instruction INST de lancement d'un processus de vérification du contenu d'une partie de la zone 52 par l'élément 3. Une fois que cette instruction INST est communiquée par le microcontrôleur 2 à l'élément 3, le microcontrôleur 2 se met en attente (HOLD) d'une réponse de l'élément de sécurité 3. Tant qu'il ne reçoit pas cette réponse, il ne poursuit pas l'exécution du code qu'il contient. Selon une variante, l'élément de sécurité 3 peut démarrer de lui-même lorsqu'il est mis sous tension, par exemple, au même moment que le microcontrôleur 2.

La vérification CHECK opérée par l'élément 3 consiste à lire une première partie de la zone 52 stockant les données relatives à un premier système d'exploitation, et à exécuter un mécanisme de vérification d'authenticité de ladite partie. Par exemple, ce mécanisme est un calcul de signature à partir du code et des données contenus dans la première partie de la zone 52, et de vérification de cette signature par rapport à une signature de référence stockée dans l'élément 3. Dans ce cas, en cas de modification autorisée du contenu de la zone 52, on met à jour la signature de référence stockée dans l'élément 3 afin de permettre les vérifications d'authenticité ultérieures.

Autrement dit, la vérification CHECK consiste à effectuer un calcul de signature à partir du code et des données relatives à un système d'exploitation à chaque fois que ce système d'exploitation demande à être mis en oeuvre. Autrement dit, la vérification permet de vérifier si les données relatives au système d'exploitation ne sont pas corrompues.

Par ailleurs, toutes les données relatives aux systèmes d'exploitation sont chiffrées. Plus particulièrement, chaque ensemble de données relatives à un système d'exploitation est chiffré en utilisant au moins une même clé de chiffrement différente d'au moins une autre clé de chiffrement d'un autre ensemble de données relatives à un autre système d'exploitation. Les clés de déchiffrement correspondantes sont toutes stockées dans l'élément de sécurité 3.

Si l'élément 3 valide l'authenticité du contenu de la partie de la zone 52, il répond (OK) au microcontrôleur 2, et lui envoie la clé de déchiffrement associée aux données de la zone 52 venant d'être vérifiées. Le microcontrôleur 2 peut alors sortir de son mode d'attente et exécuter le système d'exploitation associé à ces données.

Par contre, si l'élément 3 ne valide pas (NOK) le contenu de la première partie de la zone 52, il envoie une instruction au microcontrôleur indiquant que le premier système d'exploitation ne peut être mis en oeuvre. L'élément 3 demande, alors, à recevoir les données et instructions d'une autre partie de la zone 52 pour authentifier un autre système d'exploitation. Si tous les systèmes d'exploitation du microcontrôleur sont corrompus, alors l'élément 3 peut renvoyer une donnée ou une instruction au microcontrôleur, par exemple une clé de déchiffrement nulle, ou bien une instruction de mise en défaut du microcontrôleur. L'élément 3 peut, en outre, envoyer une série de données et d'instructions relatives à un nouveau système d'exploitation au microcontrôleur 2. Selon un exemple, ce nouveau système d'exploitation peut permettre un redémarrage ou une réinitialisation du microcontrôleur 2 ou du dispositif 1. Selon un autre exemple, ce nouveau système d'exploitation peut être, par exemple, un système d'exploitation de diagnostic permettant d'effectuer des tests sur le fonctionnement du microcontrôleur ou même du dispositif 1 complet. Selon encore un autre exemple, ce nouveau système d'exploitation peut être un système d'exploitation de mise à jour des systèmes d'exploitation du microcontrôleur 2.

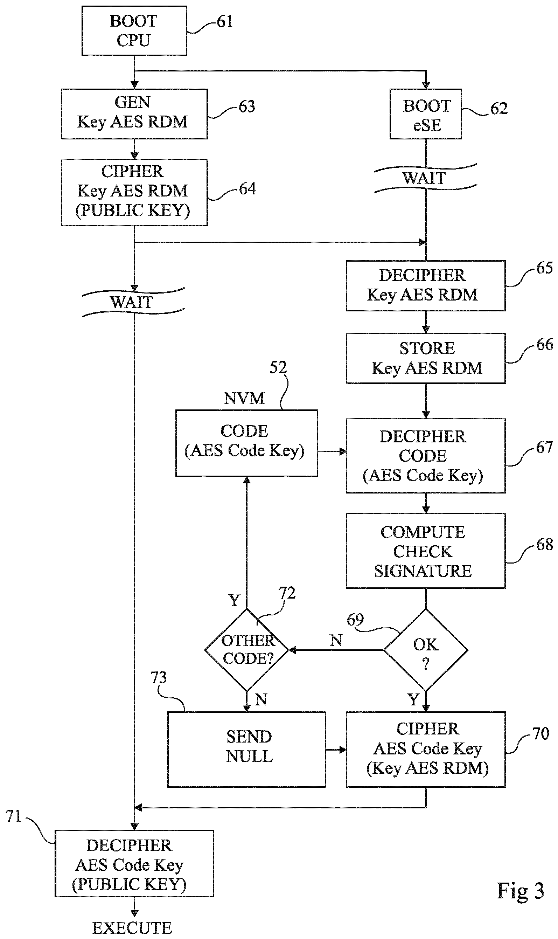

La figure 3 est une représentation schématique illustrant plus en détail le mode de réalisation de la séquence de démarrage du microcontrôleur du dispositif électronique de la figure 1.

Selon ce mode de réalisation, tout se fait par échange de messages entre le microcontrôleur 2 et l'élément de sécurité 3.

Le démarrage du microcontrôleur 2 (bloc 61, BOOT CPU) provoque le démarrage (bloc 62, BOOT eSE) de l'élément de sécurité 3. Une fois démarré, l'élément 3 se met en attente d'instruction (WAIT).

Par ailleurs, la vérification de contenu des différentes parties de la zone 52 ou des zones de mémoire non volatile (NVM) contenant du code à vérifier s'effectue également, de préférence, par une vérification de signature par l'élément 3.

Selon un mode de réalisation, le code et les données fixes, stockés en mémoire non volatile 52 et constituant les données d'initialisation du microcontrôleur 2 après son démarrage, sont chiffrés. Le chiffrement utilisé est par exemple un chiffrement symétrique de type AES. Cependant, la ou les clés de chiffrement ne sont pas stockées dans le microcontrôleur 2 mais sont stockées dans l'élément de sécurité 3.

Une fois que le microcontrôleur 2 a démarré (fin du bloc 61) et qu'il a donné instruction à l'élément 3 de démarrer, il génère une clé (bloc 63, GEN KeyAESRDM), de préférence un nombre aléatoire de la taille de l'AES utilisé pour le chiffrement du code.

Le microcontrôleur 2 transmet alors cette clé KeyAESRDM à l'élément de sécurité. De préférence, cette transmission s'effectue par un mécanisme à clé publique, le microcontrôleur chiffrant la clé KeyAESRDM avec la clé publique PUBLIC KEY de l'algorithme (bloc 64, CIPHER KeyAESRDM (PUBLIC KEY)). De préférence, le microcontrôleur 2 ne stocke pas le nombre aléatoire KeyAESRDM en mémoire non volatile. En effet, il lui suffit de stocker ce nombre en mémoire volatile, ce qui réduit les risques d'attaque. Une fois la clé KeyAESRDM transmise, le microcontrôleur se met en attente (WAIT).

L'élément 3 déchiffre la clé KeyAESRDM à l'aide de la clé publique du mécanisme à clé publique (bloc 65, DECIPHER KeyAESRDM)) et la stocke (bloc 66, STORE KeyAESRDM).

L'élément 3 déchiffre alors (bloc 67, DECIPHER CODE (AESCodeKey)) le code contenu dans la partie de la zone 52 de la mémoire non volatile du microcontrôleur 2 (ou associée à celui-ci) relative au système d'exploitation à mettre en oeuvre. L'élément 3 calcule et vérifie (bloc 68, COMPUTE/CHECK SIGNATURE) la signature de ce code.

Si la signature est correcte (sortie Y du bloc 69), l'élément 3 chiffre la clé de déchiffrement AESCodeKey, correspondante aux données venant d'être vérifiées, avec la clé KeyAESRDM (bloc 70, CIPHER AESCodeKey (KeyAESRDM)) et l'envoie au microcontrôleur 2. Ce dernier déchiffre la clé AESCodeKey (bloc 71, DECIPHER AESCodeKey (PUBLIC KEY)) avec la clé KeyAESRDM. Comme dit précédemment, l'élément 3 stocke plusieurs clés de déchiffrement AESCodeKey, chacune associée à tout ou partie des données relatives à un système d'exploitation.

Le microcontrôleur 2 utilise alors cette clé AESCodeKey pour déchiffrer le code contenu dans la partie de la zone 52, c'est-à-dire les données qui viennent d'être vérifiées par l'élément de sécurité 3, et l'exécuter (EXECUTE). Toutefois, la clé AESCodeKey n'est pas stockée en mémoire non volatile par le microcontrôleur 2. Ainsi, côté microcontrôleur 2, le nombre KeyAESRDM et la clé AESCodeKey ne sont stockés que dans des éléments de mémorisation volatile (mémoire RAM, registres ou autres).

Si la signature est incorrecte (sortie N du bloc 69, OK ?), l'élément 3 demande à examiner la partie suivante de la zone 52 (bloc 72, OTHER CODE ?), c'est-à-dire les données et instructions relatives à un autre système d'exploitation mis en oeuvre par le microcontrôleur 2. Ainsi, les données et instructions relatives au premier système d'exploitation ne sont pas déchiffrées, et donc ne peuvent être utilisées par le microcontrôleur 2.

Si les données et instructions relatives à un autre système d'exploitation n'ont pas encore été vérifiées (sortie Y du bloc 72), alors les données relatives à cet autre système d'exploitation sont envoyées à l'élément 3 (bloc 52) et leur signature est vérifiée (bloc 67).

Si toutes les données et instructions relatives aux autres systèmes d'exploitation ont déjà été vérifiées et sont considérées comme corrompues (sortie N du bloc 72), alors l'élément 3 envoie une donnée ou une instruction au microcontrôleur (bloc 73, SEND NULL), par exemple une clé de déchiffrement nulle, ou une instruction de mise en défaut du microcontrôleur 2. L'élément 3 peut, en outre, envoyer une série de données et d'instructions relative à un nouveau système d'exploitation au microcontrôleur 2. Selon un exemple, ce nouveau système d'exploitation peut permettre un redémarrage ou une réinitialisation du microcontrôleur 2 ou du dispositif 1. Selon un autre exemple, ce nouveau système d'exploitation peut être, par exemple, un système d'exploitation de diagnostic permettant d'effectuer des tests sur le fonctionnement du microcontrôleur 2 ou même du dispositif 1 complet. Selon encore un autre exemple, ce nouveau système d'exploitation peut être un système d'exploitation de mise à jour des systèmes d'exploitation du microcontrôleur 2.

La donnée ou instruction envoyée par l'élément 3, ou le cas échéant, la série de données et d'instructions, sont chiffrées avec la clé KeyAESRDM (bloc 70) avant leur envoi au microcontrôleur 2. Le microcontrôleur 2 les déchiffre (bloc 71) puis les utilise.

Selon une variante de réalisation, la clé AESCodeKey est générée par l'élément de sécurité 3 à chaque changement de la signature du code contenu dans la zone 52, c'est-à-dire à chaque modification de tout ou partie de ce code.

Selon une autre variante, lors de la fabrication des circuits (du microcontrôleur 2 et de l'élément de sécurité 3), le code de chiffrement de la mémoire 52 du microcontrôleur est généré par l'élément de sécurité 3. Cela signifie que le code AESCodeKey varie d'un dispositif 1 à un autre.

De préférence, la clé asymétrique (paire de clés publique et privée) est unique par paire de composant microcontrôleur 2 / élément de sécurité 3.

Selon une autre variante, l'élément de sécurité 3 peut choisir quel système d'exploitation est à mettre en oeuvre par le microcontrôleur 2.

Selon une autre variante, l'élément de sécurité peut vérifier tous les systèmes d'exploitation avant de décider quel système d'exploitation doit être mis en oeuvre.

Selon une autre variante, lors de la mise à jour d'un système d'exploitation, la clé de déchiffrement stockée dans l'élément de sécurité 3 qui lui est associé peut être modifiée.

Selon une autre variante, l'élément de sécurité 3 peut avoir la charge de décider quel système d'exploitation est à mettre en oeuvre. Il peut, par exemple, décider quel système d'exploitation doit être lancé après avoir déterminé que des données relatives à un premier système d'exploitation sont corrompues. Il peut, par exemple, décider de lancer un autre système d'exploitation dont la fonction est de mettre à jour ledit premier système d'exploitation. Plus précisément, l'élément sécurisé 3 pourrait charger un autre système d'exploitation adapté à mettre à jour les données du microcontrôleur 2. Pour faire ce choix, l'élément de sécurité pourrait recevoir une instruction sécurisée lui indiquant la marche à suivre avant la vérification des données, par exemple pendant une mise en oeuvre précédente d'un des systèmes d'exploitation. A titre de variante, l'élément de sécurité 3 pourrait lancer ce système d'exploitation avant même la vérification des données relatives aux systèmes d'exploitation s'il a reçu l'ordre lors d'une mise en oeuvre directement précédente d'un autre système d'exploitation.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé de vérification de l'authenticité d'au moins une première partie du contenu d'une mémoire non volatile d'un dispositif électronique (1) comprenant un microcontrôleur (2) et un élément de sécurité embarqué (3), comportant les étapes suivantes :
- démarrer (61) le microcontrôleur avec des instructions stockées dans une première zone (51) de mémoire sécurisée associée au microcontrôleur ;
- démarrer (62) l'élément de sécurité, l'élément de sécurité comprenant plusieurs clés de déchiffrement chacune associée à une partie du contenu d'une deuxième zone (52) de mémoire non volatile reprogrammable associée au microcontrôleur ;
- exécuter (68), par l'élément de sécurité, une vérification de signature d'une première partie du contenu de la deuxième zone ;
- si la signature est vérifiée, l'élément de sécurité envoie (70) la clé de déchiffrement associé à ladite première partie au microcontrôleur ; et
- si la signature n'est pas vérifiée, l'élément de sécurité exécute une vérification de signature d'une autre partie du contenu de ladite deuxième zone mémoire.

2. Procédé selon la revendication 1, dans lequel chaque partie du contenu de la deuxième zone (52) de la mémoire non volatile comprend des données et des instructions permettant au microcontrôleur (2) de mettre en oeuvre un système d'exploitation différent.

3. Procédé selon la revendication 2, dans lequel le microcontrôleur (2) est adapté à mettre en oeuvre au moins trois systèmes d'exploitation.

4. Procédé selon l'une quelconque des revendications 1 à 3, dans lequel si aucune signature n'est vérifiée, l'élément de sécurité envoie (73) des données au microcontrôleur (2).

5. Procédé selon la revendication 4, dans lequel lesdites données comprennent une clé de déchiffrement adapté à ne déchiffrer aucune partie du contenu de ladite deuxième zone (52) de ladite mémoire non volatile.

6. Procédé selon la revendication 4 ou 5, dans lequel lesdites données comprennent des données et des instructions permettant au microcontrôleur (2) de mettre en oeuvre un système d'exploitation inconnu du microcontrôleur (2).

7. Procédé selon la revendication 6, dans lequel ledit système d'exploitation inconnu du microcontrôleur (2) est un système d'exploitation permettant de :
- redémarrer le microcontrôleur (2) ;
- lancer un diagnostic du microcontrôleur (2) ;
- mettre à jour un ou plusieurs systèmes d'exploitation que le microcontrôleur (2) est adapté à mettre en oeuvre ; ou
- réinitialiser le microcontrôleur (2).

8. Procédé selon l'une quelconque des revendications 1 à 7, dans lequel le microcontrôleur (2) génère (63) une deuxième clé (KeyAESRDM), la transmet à l'élément de sécurité (3) qui l'utilise pour chiffrer (70) la transmission de la première clé (AESCodeKey) vers le microcontrôleur.

9. Procédé selon la revendication 8, dans lequel la transmission de la deuxième clé (KeyAESRDM) utilise un algorithme asymétrique à clé publique.

10. Procédé selon la revendication 9, dans lequel la clé de chiffrement asymétrique est unique par couple microcontrôleur (2) / élément de sécurité (3).

11. Procédé selon l'une quelconque des revendications 1 à 10, dans lequel la première clé (AESCodeKey) n'est pas stockée en mémoire non volatile dans le microcontrôleur (2) .

12. Procédé selon l'une quelconque des revendications 1 à 11, dans lequel, en cas de mise à jour authentique d'au moins une partie du contenu de la deuxième zone (52), la signature associée à ladite partie stockée dans l'élément de sécurité (3) est modifiée en conséquence.

13. Procédé selon l'une quelconque des revendications 1 à 12, dans lequel la première clé (AESCodeKey) est générée par l'élément de sécurité (3).

14. Procédé selon l'une quelconque des revendications 1 à 13, dans lequel, si la signature n'est pas vérifiée, l'élément de sécurité (3) choisit une autre partie du contenu de ladite deuxième zone mémoire dont il exécute la vérification.

15. Procédé selon l'une quelconque des revendications 1 à 14, dans lequel l'élément de sécurité peut choisir une autre partie du contenu de ladite deuxième zone mémoire sur la base d'une instruction reçue pendant une mise en oeuvre précédente d'une partie du contenu de la deuxième zone mémoire.

16. Dispositif électronique comportant :
- un microcontrôleur (2) ; et
- un élément de sécurité embarqué (3),
le microcontrôleur et l'élément de sécurité étant adaptés à la mise en oeuvre du procédé selon l'une quelconque des revendications 1 à 15.

17. Dispositif selon la revendication 16, dans lequel un circuit intermédiaire (4) est intercalé entre le microcontrôleur (2) et l'élément de sécurité (3).

## Patentansprüche

1. Verfahren zum Prüfen der Authentizität von mindestens einem ersten Teil des Inhalts eines nichtflüchtigen Speichers einer elektronischen Vorrichtung (1), die einen Mikrocontroller (2) und ein eingebettetes Sicherheitselement (3) aufweist, mit den folgenden Schritten:
- Starten (61) des Mikrocontrollers mit Befehlen, die in einem ersten sicheren Speicherbereich (51), der dem Mikrocontroller zugeordnet ist, gespeichert sind;
- Starten (62) des Sicherheitselements, wobei das Sicherheitselement eine Vielzahl von Dechiffrierschlüsseln aufweist, die jeweils einem Teil des Inhalts eines zweiten, reprogrammierbaren nichtflüchtigen Speicherbereichs (52) zugeordnet sind, der dem Mikrocontroller zugeordnet ist;
- Ausführen (68), mit dem Sicherheitselement, einer Signaturprüfung an einem ersten Teil des Inhalts des zweiten Bereichs;
- wenn die Signatur verifiziert wird, sendet das Sicherheitselement den mit dem ersten Teil verbundenen Dechiffrierschlüssel an den Mikrocontroller (70); und
- wenn die Signatur nicht verifiziert wird, führt das Sicherheitselement eine Signaturprüfung eines anderen Teils des Inhalts des zweiten Speicherbereichs durch.

2. Verfahren nach Anspruch 1, wobei jeder Teil des Inhalts des zweiten nichtflüchtigen Speicherbereichs (52) Daten und Anweisungen aufweist, die es dem Mikrocontroller (2) ermöglichen, ein anderes Betriebssystem zu implementieren.

3. Verfahren nach Anspruch 2, wobei der Mikrocontroller (2) in der Lage ist, mindestens drei Betriebssysteme zu implementieren.

4. Verfahren nach einem der Ansprüche 1 bis 3, wobei das Sicherheitselement Daten an den Mikrocontroller (2) sendet (73), wenn keine Signatur verifiziert wird.

5. Verfahren nach Anspruch 4, wobei die Daten einen Dechiffrierschlüssel aufweisen, mit dem kein Teil des Inhalts des zweiten nichtflüchtigen Speicherbereichs (52) entschlüsselt werden kann.

6. Verfahren nach Anspruch 4 oder 5, wobei die Daten Daten und Anweisungen aufweisen, die es dem Mikrocontroller (2) ermöglichen, ein dem Mikrocontroller (2) unbekanntes Betriebssystem zu implementieren.

7. Verfahren nach Anspruch 6, wobei das dem Mikrocontroller (2) unbekannte Betriebssystem ein Betriebssystem ist, das Folgendes ermöglicht
- einen Neustart des Mikrocontrollers (2);
- eine Diagnose des Mikrocontrollers (2) einzuleiten;
- Aktualisieren eines oder mehrerer Betriebssysteme, die der Mikrocontroller (2) implementieren kann; oder
- Rücksetzen des Mikrocontrollers (2).

8. Verfahren nach einem der Ansprüche 1 bis 7, wobei der Mikrocontroller (2) einen zweiten Schlüssel (KeyAESRDM) erzeugt (63) und ihn an das Sicherheitselement (3) überträgt, das ihn zur Verschlüsselung (70) der Übertragung des ersten Schlüssels (AESCodeKey) an den Mikrocontroller verwendet.

9. Verfahren nach Anspruch 8, wobei die Übertragung des zweiten Schlüssels (KeyAESRDM) einen asymmetrischen Algorithmus mit öffentlichem Schlüssel verwendet.

10. Verfahren nach Anspruch 9, wobei der asymmetrische Chiffrierschlüssel pro Paar aus Mikrocontroller (2) / Sicherheitselement (3) einzigartig ist.

11. Verfahren nach einem der Ansprüche 1 bis 10, wobei der erste Schlüssel (AESCodeKey) nicht im nichtflüchtigen Speicher des Mikrocontrollers (2) gespeichert wird.

12. Verfahren nach einem der Ansprüche 1 bis 11, wobei im Falle einer authentischen Aktualisierung mindestens eines Teils des Inhalts des zweiten Bereichs (52) die diesem Teil zugeordnete Signatur, die in dem Sicherheitselement (3) gespeichert ist, entsprechend geändert wird.

13. Verfahren nach einem der Ansprüche 1 bis 12, wobei der erste Schlüssel (AESCodeKey) von dem Sicherheitselement 3) erzeugt wird.

14. Verfahren nach einem der Ansprüche 1 bis 13, wobei das Sicherheitselement (3), wenn die Signatur nicht verifiziert wird, einen anderen Teil des Inhalts des zweiten Speicherbereichs auswählt, den es überprüft.

15. Verfahren nach einem der Ansprüche 1 bis 14, wobei das Sicherheitselement einen anderen Teil des Inhalts des zweiten Speicherbereichs auf der Grundlage einer Anweisung auswählen kann, die während einer vorherigen Implementierung eines Teils des Inhalts des zweiten Speicherbereichs empfangen wurde.

16. Ein elektronisches Gerät aufweisend:
- einen Mikrocontroller (2); und
- ein eingebettetes Sicherheitselement (3),
wobei der Mikrocontroller und das Sicherheitselement in der Lage sind, das Verfahren nach einem der Ansprüche 1 bis 15 zu implementieren.

17. Vorrichtung nach Anspruch 16, wobei eine Zwischenschaltung (4) zwischen dem Mikrocontroller (2) und dem Sicherheitselement (3) angeordnet ist.

## Claims

1. A method of checking the authenticity of at least a first portion of the content of a non-volatile memory of an electronic device (1) comprising a microcontroller (2) and an embedded secure element (3), comprising the steps of:
- starting (61) the microcontroller with instructions stored in a first secure memory area (51) associated with the microcontroller;
- starting (62) the secure element, the secure element comprising a plurality of decipher keys, each associated with a portion of the content of a second reprogrammable non-volatile memory area (52) associated with the microcontroller;
- executing (68), with the secure element, a signature check on a first portion of the content of the second area;
- if the signature is verified, the secure element sends (70) the decipher key associated with said first portion to the microcontroller; and
_ if the signature is not verified, the secure element executes a signature check of another portion of the content of said second memory area.

2. The method according to claim 1, wherein each portion of the content of the second non-volatile memory area (52) comprises data and instructions enabling the microcontroller (2) to implement a different operating system.

3. The method according to claim 2, wherein the microcontroller (2) is capable of implementing at least three operating systems.

4. The method according to any of claims 1 to 3, wherein if no signature is verified, the security element sends (73) data to the microcontroller (2).

5. The method according to claim 4, wherein said data comprise a decipher key capable of deciphering no portion of the content of said second non-volatile memory area (52) .

6. The method according to claim 4 or 5, wherein said data comprise data and instructions enabling the microcontroller (2) to implement an operating system unknown by the microcontroller (2).

7. The method according to claim 6, wherein said operating system unknown by the microcontroller (2) is an operating system enabling to:
- restart the microcontroller (2);
- initiate a diagnosis of the microcontroller (2);
- update one or a plurality of operating systems that the microcontroller (2) is capable of implementing; or
- reset the microcontroller (2).

8. The method according to any of claims 1 to 7, wherein the microcontroller (2) generates (63) a second key (KeyAESRDM), transmits it to the secure element (3) which uses it to cipher (70) the transmission of the first key (AESCodeKey) to the microcontroller.

9. The method according to claim 8, wherein the transmission of the second key (KeyAESRDM) uses a public key asymmetric algorithm.

10. The method according to claim 9, wherein the asymmetric cipher key is unique per microcontroller (2) / secure element (3) pair.

11. The method according to any of claims 1 to 10, wherein the first key (AESCodeKey) is not stored in the non-volatile memory in the microcontroller (2).

12. The method according to any of claims 1 to 11, wherein in case of an authentic update of at least a portion of the content of the second area (52), the signature associated with said portion stored in the secure element (3) is accordingly modified.

13. The method according to any of claims 1 to 12, wherein the first key (AESCodeKey) is generated by the secure element (3).

14. The method according to any of claims 1 to 13, wherein, if the signature is not verified, the secure element (3) selects another portion of the content of said second memory area that it checks.

15. The method according to any of claims 1 to 14, wherein the secure element may select another portion of the content of said second memory area based on an instruction received during a previous implementation of a portion of the content of the second memory area.

16. An electronic device comprising:
- a microcontroller (2); and
- an embedded secure element (3),
the microcontroller and the secure element being capable of implementing the method according to any of claims 1 to 15.

17. The device according to claim 16, wherein an intermediate circuit (4) is interposed between the microcontroller (2) and the secure element (3).
